# EUROPÄISCHE PATENTANMELDUNG

(11) **EP 3 181 022 A1**
(43) Veröffentlichungstag der Anmeldung: **21.06.2017**
(21) Anmeldenummer: 16204431.7
(22) Anmeldetag: 15.12.2016
(51) Int. Cl.: A47J 37/07, C10L 11/04, C10L 11/06

(54) **GRILLANZÜNDER**

(30) Priorität: 16.12.2015 DE 202015008606 U
(71) Anmelder: Vorreiter UG (haftungsbeschränkt), 53175 Bonn (DE)
(72) Erfinder: STEBER, Martin, 53111 Bonn (DE)
(74) Vertreter: KNH Patentanwälte

(57) **Zusammenfassung**

Anzündhilfe, insbesondere für die Anwendung im Grill, aufweisend einen Aufsteller (2) mit einem daran befestigten Zünddocht (1) zum Zünden der Anzündhilfe, welcher mit Wachs oder wachsartigem Fett ummantelt ist und einer auf den Aufsteller aufziehbaren Brennspirale (3), welche beim Aufziehen auf den Aufsteller teleskopiert wird.

## Beschreibung

Bei handelsüblichen Grillanzündern bzw. sonstigen Anzündhilfen bestehen in der Regel zwei Faktoren, die in der Öffentlichkeit Beachtung finden. Dies ist zum einen der Umwelt- bzw. Gesundheitsfaktor, also die Frage, welche chemischen Stoffe sich in Grillanzündern befinden und welche Auswirkungen diese auf die Umwelt und Gesundheit haben können. Zum andern ist der Zeitfaktor entscheidend für das Entzünden der Kohle. Dabei spielt vor allem die Frage eine Rolle, wie viel Zeit ein Grillanzünder benötigt, um die Kohle zu entzünden, durchzuglühen und schließlich grillfertig zu machen.

Insbesondere von handelsüblichen flüssigen Grillanzündern geht aufgrund der Zusammensetzung aus in der Regel Petroleum oder Paraffinöl eine hohe Gesundheitsgefahr durch Verschlucken aus. Dafür können geringe Mengen bereits schädlich sein. Gleiches gilt häufig auch für feste Anzündhilfen aus Kerosin und Paraffin. Bei der Verwendung derartiger flüssiger oder fester Anzündhilfen ist es notwendig, dass diese vollständig verbrennen, bevor das Grillgut aufgelegt wird, da sich andernfalls Rückstände im Geschmack des Grillguts bemerkbar machen können.

Bei Grillanzündern auf Wachsbasis ist beim Entzünden ebenso ein unangenehmer Geruch feststellbar.

Ein wesentlicher Faktor beim Grillen ist die Zeit. Bis die Holzkohle grillbereit ist, vergehen mitunter 40 bis 50 Minuten. Nur wenige Produkte sind in der Lage, diese Zeit zu unterbieten. Bei der Verwendung von Grillbriketts anstatt Holzkohle liegen diese Zeiten üblicherweise noch höher. Dort benötigt man vom Zünden bis zur Grillbereitschaft regelmäßig zwischen 40 und 60 Minuten.

Hinzu kommt, dass bei festen wie flüssigen Anzündhilfen in der Regel Luft durch beispielsweise Fächern zugeführt werden muss, wodurch zusätzlicher Arbeitsaufwand entsteht, bzw. das Durchglühen der Kohle verlängert wird, sofern die Luftzufuhr nicht ausreichend erfolgt.

Hiervon ausgehend löst bzw. lindert die im Folgenden vorgestellte neuartige Anzündhilfe diese Probleme, indem sie einerseits fast vollständig ohne chemische Zusätze auskommt und sie es andererseits ermöglicht, bereits nach sehr kurzer Zeit die Grillbereitschaft herzustellen.

Die Anzündhilfe wird beschrieben durch die Merkmale des Anspruchs 1. Weitere vorteilhafte Ausgestaltungen sind in den abhängig formulierten Ansprüchen angegeben. Die Ausführungen in den Ansprüchen und der zugehörigen Beschreibung sind in beliebiger, technisch sinnvoller Weise miteinander kombinierbar und geben weitere Ausführungsvarianten der Erfindung an.

Die Anzündhilfe nutzt den Kamineffekt, um zügig die Grillbereitschaft herbei zu führen. Die Anzündhilfe besteht aus insgesamt drei Komponenten, nämlich einem Aufsteller, einer Brennspirale und einem Zünddocht. Der Grillanzünder besteht größtenteils aus unbehandelten Bögen von Papier, Pappe und/oder Wellpappe und ist daher gesundheitlich unbedenklich.

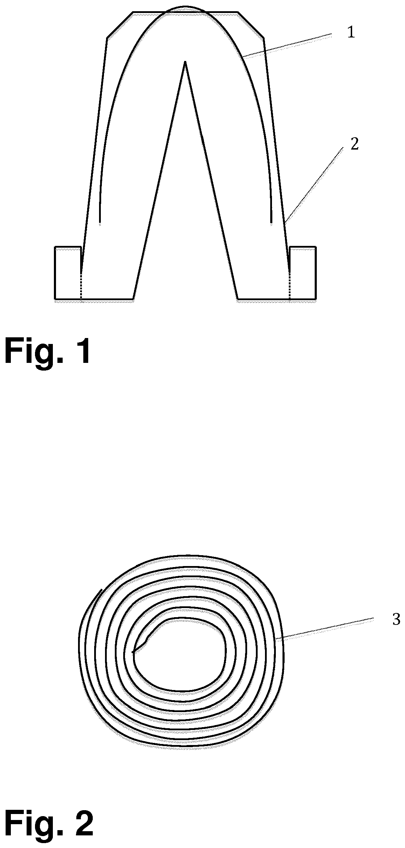

Der Aufsteller besteht vorzugsweise aus Papier, Pappe, insbesondere Wellpappe. Der Aufsteller kann vorzugsweise mit mehreren Füßen ausgestattet werden. Zwischen zwei und vier Füße sind möglich, mit denen der Aufsteller standfest aufgestellt werden kann. Bevorzugt ist eine Variante des Aufstellers mit zwei Füßen (Fig. 1). Dann kann der Aufsteller mit seinen zwei Füßen aus einem einzelnen Bogen von Papier bzw. Pappe mittels Falten aufgebaut werden. Auf dessen Außenseiten sind dann unten zwei senkrechte Auslassungen mit Enden eingestanzt. Diese Enden können umgeknickt werden, wodurch der Aufsteller eine Standfestigkeit erreicht, die für die Anwendung als Grillanzünder ausreichend ist. Bei den Aufstellervarianten mit den drei oder vier Füßen, können diese umknickbaren Füße weggelassen werden. Dafür ist es gegebenenfalls erforderlich den Aufsteller aus mehreren Papier- oder Pappbögen zusammen zu stecken.

Die Höhe des Aufstellers beträgt bevorzugt 8 bis 20 cm, besonders bevorzugt 10 bis 12 cm. Die Unterseite weist vorzugsweise eine Breite von 5 bis 20 cm, besonders bevorzugt eine Breite von 8 bis 10 cm auf. An der Oberseite hat der Aufsteller bevorzugt eine Breite von 3 bis 10 cm, besonders bevorzugt ca. 6 cm.

Das hauptsächliche Brennelement der Anzündhilfe ist die Brennspirale (Fig. 2). Diese Brennspirale ist vorzugsweise ebenfalls aus Pappe, Wellpappe oder Papier gebildet, wobei unbedrucktes Recyclingpapier das bevorzugte Material für die Brennspirale ist. Dazu wird unbedrucktes Recyclingpapier (beispielsweise in den Abmessungen: 35 x 150 cm) zu einer Bahn gefaltet, die beispielsweise 150 cm lang und 2 cm hoch ist. Alternativ zu Papier kann auch ein 150 cm langer und 2 cm hoher Streifen Wellpappe zur Bildung der Brennspirale als Bahn verwendet werden. Diese Bahn ist zu einer Spirale bzw. Rolle aufgewickelt, die einen Innendurchmesser von beispielsweise 5 cm und einen Außendurchmesser von 8 bis 10 cm aufweist. An dem Außendurchmesser ist die Bahn vorzugsweise mit einem umweltverträglichen Kleber verklebt, um ein Aufwickeln der Brennspirale zu verhindern. An dem Innendurchmesser ist ein Verkleben üblicherweise nicht erforderlich. Die Brennspirale hat vorzugsweise Löcher, Strukturierungen und/oder Unterbrechungen, die eine gute Luftdurchströmung durch die Brennspirale und/oder eine gute Anströmung der Brennspirale mit Luft ermöglichen. Solche Strukturierungen und/oder Unterbrechungen können beispielsweise durch die Struktur von Wellpappe selbst gebildet sein.

Auf zwei Außenseiten des Aufstellers ist ein Zünddocht befestigt. Dieser Zünddocht hat vorzugsweise eine Gesamtlänge von ca. 20 cm. Der Zünddocht reicht von der Oberseite des Aufstellers bis ca. 2 cm über den unteren Rand des Aufstellers. Der Zünddocht ist an dem Aufsteller vorzugsweise flächig angeklebt (Fig. 1). Der Zünddocht ist bevorzugt mit Wachs oder Paraffin ummantelt und weist besonders bevorzugt einen Durchmesser von 2 mm auf. Der Zünddocht sorgt dafür, dass genügend Hitze entsteht, um den Aufsteller sowie die Brennspirale vollständig in Brand zu setzen. Ein mittlerer Teil des Dochts steht vorzugsweise nach oben über den Aufsteller hinaus, so dass dieser Teil des Dochts sehr einfach mit einem Feuerzeug angezündet werden kann. Die beiden Enden des Dochts erstrecken sich vorzugsweise von oben nach unten und sorgen für eine sichere Ausbreitung des Feuers von oben entlang des Aufstellers.

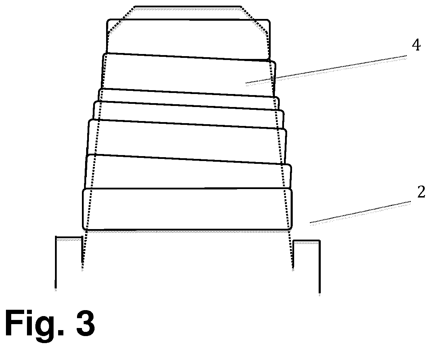

Zur Anwendung der Anzündhilfe wird die Brennspirale am äußeren Ring angefasst und von oben über den Aufsteller bis ganz unten aufgezogen, so dass sich eine konische Form mit flacher Spitze ergibt (Fig. 3). Die Freiräume in der abgezogenen Spirale sorgen anschließend für die nötige Luftzufuhr. Die Brennspirale wird beim Aufziehen auf den Aufsteller teleskopiert (siehe ebenfalls Fig. 3).

Vorzugsweise ist der Durchmesser der Brennspirale (Innendurchmesser und Außendurchmesser) so gewählt, dass die Brennspirale leicht unter Spannung steht, wenn diese auf den Aufsteller aufgezogen wird. Dies gibt der zusammengesetzten Anzündhilfe aus Aufsteller und Brennspirale mechanische Stabilität. Vorzugsweise ist die Ausdehnung des Aufstellers im oberen Bereich (Breite an der Oberseite) bis zu 2 cm größer als der Innendurchmesser der Brennspirale. Vorzugsweise ist die Ausdehnung des Aufstellers im unteren Bereich (Breite an der Unterseite) bis zu 2 cm größer als der Außendurchmesser der Brennspirale.

Die Anzündhilfe kann besonders bevorzugt als Grillanzünder zum Grillen verwendet werden. Der Grillanzünder wird in der Mitte der Grillschale platziert und die Grillkohle gleichmäßig darum herum verteilt und möglichst bis zu den oberen Rändern der Anzündhilfe aufgeschichtet. Ideal funktioniert dies ab einer Menge von ca. 1000g Holzkohle. Anschließend wird der Zünddocht angezündet. Dies kann von oben geschehen, von wo aus der Zünddocht einfach zugänglich ist. Nachdem der Zünddocht den Grillanzünder entzündet hat, entsteht in der Mitte des Grillkohlehaufens ein Kamineffekt, der dafür sorgt, dass die Kohle schnell gezündet wird und durchglüht. Nach rund 12 bis 17 Minuten ist die Kohle durchgeglüht und kann geschürt werden.

### Bezugszeichenliste

- 1: Docht
- 2: Aufsteller
- 3: Brennspirale
- 4: Ausgezogene Brennspirale

## Patentansprüche

1. Anzündhilfe, insbesondere für die Anwendung im Grill, aufweisend einen Aufsteller (2) mit einem daran befestigten Zünddocht (1) zum Zünden der Anzündhilfe, welcher mit Wachs oder wachsartigem Fett ummantelt ist und einer auf den Aufsteller (2) aufziehbaren Brennspirale (3), welche beim Aufziehen auf den Aufsteller (2) teleskopiert wird.

2. Anzündhilfe nach Anspruch 1 wobei die Brennspirale (3) eine Rolle (aus Wellpappe oder Papier) ist, und derart strukturiert ist, dass beim Aufziehen auf den Aufsteller (2) eine konische Form entsteht.

3. Anzündhilfe nach Anspruch 1 oder 2, wobei die Brennspirale (3) derart aufgebaut ist, dass innerhalb der Brennspirale Freiräume existieren, wenn die Brennspirale auf den Aufsteller aufgesetzt ist, welche innerhalb der aufgezogenen Brennspirale für eine ausreichende Versorgung mit Luft sorgen.

4. Anzündhilfe nach einem der vorhergehenden Ansprüche, wobei der Docht (1) nach oben über den Aufsteller (2) übersteht, um ein einfaches Entzünden zu ermöglichen.

5. Anzündhilfe nach einem der vorhergehenden Ansprüche, wobei der Aufsteller (2) aus einem Faltbogen Pappe gebildet ist.

6. Anzündhilfe nach einem der vorhergehenden Ansprüche, wobei der Aufsteller aus mehreren ineinander steckbaren Faltbögen Pappe gebildet ist.

7. Anzündhilfe nach einem der vorhergehenden Ansprüche, wobei der Aufsteller (2) Füße aufweist, die zu einer verbesserten Standfestigkeit des Aufstellers beitragen.

8. Anzündhilfe nach einem der vorhergehenden Ansprüche, wobei der Durchmesser der Brennspirale (3) so gewählt ist, dass die Brennspirale leicht unter Spannung steht, wenn diese auf den Aufsteller (2) ausgezogen wird.
